# EUROPEAN PATENT SPECIFICATION

(11) **EP 1 753 816 B1**
(45) Date of publication and mention of the grant of the patent: **18.09.2013**
(21) Application number: 04753204.9
(22) Date of filing: 25.05.2004
(51) Int. Cl.: C08L 51/00, C08F 20/06, C08F 20/26, C08F 22/20, C08F 212/00, C09D 11/10

(54) **POLYMERIC DISPERSANTS TO IMPROVE SMEAR IN PRINTING**
POLYMERE DISPERGIERMITTEL ZUR VERBESSERUNG DES SCHMIERENS BEIM DRUCKEN
DISPERSANTS POLYMERES PERMETTANT DE REDUIRE LE MACULAGE LORS D'UNE IMPRESSION

(43) Date of publication of application: 21.02.2007
(73) Proprietor: Lexmark International, Inc., Lexington, Kentucky 40550 (US)
(72) Inventor: SACOTO, Paul, Lexington, KY 40515 (US); SUN, Jing, X., Lexington, KY 40509 (US); SUN, Naiyu, Lexington, KY 40514 (US)
(74) Representative: Beacham, Annabel Rose
(86) International application number: PCT/US2004/016332
(87) International publication number: WO 2005/118716

(56) References cited:
- EP-A1- 1 113 051
- EP-A1- 1 266 941
- US-A- 5 231 131
- US-A- 5 708 095
- US-A- 2001 023 265
- US-B1- 6 652 634
- US-B2- 6 440 203

## Description

### FIELD OF THE INVENTION

This invention relates to polymeric dispersants useful in ink jet ink compositions.

### BACKGROUND OF THE INVENTION

Ink jet printing is a non-impact method of printing that involves ejecting ink from a nozzle onto paper or other print media. The actual ink ejection method may occur via several processes including pressurized nozzles, electrostatic fields, piezoelectric elements within an ink nozzle, and heaters for vapor phase bubble formation.

The composition of the ink is traditionally comprised of deionized water, a water soluble organic solvent, and a colorant. The colorant may be a soluble dye or insoluble pigment. Several problems, however, are associated with soluble dyes that are not applicable to insoluble pigments. These problems include poor water-fastness, poor light-fastness, poor thermal stability, facile oxidation, dye crystallization, and ink bleeding and feathering on the print medium. To circumvent these problems, use of a pigment as the colorant is preferred. Pigments generally have better light-fast and water-fast properties, are more resistant to oxidation, and have higher thermal stability.

Use of a pigment instead of an aqueous dye presents solubility problems since the pigments are insoluble in aqueous media. As a result, the insoluble pigment is generally stabilized in a dispersion by a polymeric dispersant. Generally speaking most pigment inks stabilized by polymers in aqueous media are based on an electrosteric stabilizing mechanism in which a hydrophobic group in the dispersant acts as an anchor adsorbed on the pigment particle surface through an acid-base relation, electron donor/acceptor relation, Van der Waals forces, or physical absorption. The hydrophilic group is extended into the aqueous medium to keep the dispersant soluble. This results in a competition in the dispersing process between the pigment particle and the polymer, the polymer and the solvent, and the pigment particle and the solvent.

EP 1 113 051 A1 and EP 1 266 941 A1 disclose a water-based ink comprising an aqueous dispersion of polymer particles. US 5,708,095 discloses a graft polymer having a hydrophobic backbone and at least one discrete hydrophobic side chain, useful as dispersants in ink jet inks.

In order to form a stable polymeric dispersion, several factors are considered. First, the polymer must be firmly adsorbed to the pigment surface to withstand shear force and the competition of other chemical species. This requires a careful match of the polarity of the pigment surface to the hydrophobic group in the dispersant. Second, the physical dimensions of the hydrophobic group in the dispersant must be adequate to fully cover the pigment surface, otherwise, the adsorbed polymer will act as a flocculent. Third, an electrostatic layer of a requisite thickness around the particle is needed to repulse aggregation of particles within the aqueous medium.

In addition, many polymeric dispersions do not have acceptable smear resistance ability for some particular applications such as on photo paper or gelatin paper. The smear resistance of ink comprising a pigment dispersion can be improved in several ways, such as adding a latex binder or more penetrant to the ink formulation. But, in practice, penetrants reduce optical density and chroma, and binders may not work on photo paper coating. Therefore, rather than attempting to increase the smear resistance of pigment inks through the use of additives, the polymers of the present invention provide a dispersant that increases the smear resistance of pigmented inks, especially when used on photo or gelatin paper. The polymers of the present invention also provide excellent chroma for printing on photo paper.

### SUMMARY OF THE INVENTION

The present invention relates to graft copolymers, useful as dispersants in ink jet ink compositions, which preferably have a weight average molecular weight from 3,000 to 13,000. The graft copolymers comprise monomers having electron rich functional groups, which exhibit favorable interactions with the surface of pigment particles thereby better stabilizing the pigment dispersion within the aqueous ink composition. The graft copolymers also comprise hydrophobic monomers having the ability to form hydrogen bonding.

The graft polymers of the present invention comprise: (a) a hydrophilic polymeric segment;
(b) a hydrophobic polymeric segment comprising a hydrophobic monomeric unit comprising an hydroxyalkyl methacrylate or an hydroxyalkyl acrylate; and
(c) a stabilizing polymeric segment comprising an aromatic functional group, wherein the stabilizing polymeric segment comprises a stabilizing monomeric unit comprising nonylphenol acrylate; nonylphenol methacrylate; nonylphenoxy poly(propyleneoxy)ₙ methacrylate, wherein n is from 1 to about 40; nonylphenoxy poly(propyleneoxy)ₙ acrylate, wherein n is from I to about 40; or 2,4,6-tris-(1-phenylethyl)phenoxy poly(ethyleneoxy)ₙ methacrylate, wherein n is from about 1 to about 40; or a stabilizing polymeric segment comprises a stabilizing monomeric unit comprising
   (a) a hydrophobic head of the formula: 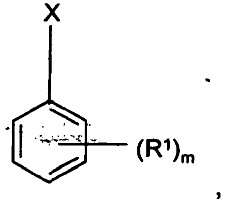 wherein m is an integer from 1 to 3, X comprises a linker group comprising -0-, - NH- or -S-, and each R¹ independently comprises a hydroxy, -C₁-C₉ alkyl, -C₁-C₉ alkylene-aryl, or heteroaryl group; and
   (b) a hydrophilic tail comprising a.-(OCH₂CH₂)ₙ- or -[OCH(CH₃)CH₂]ₙ- group, wherein n is from 0 to 50, wherein the hydrophilic tail is bonded to the hydrophobic head through the linker group X and the other end of the hydrophilic tail is bonded to a vinyl ester group moiety. The stabilizing segment comprises an electron rich aromatic functional group, which exhibits favorable interactions with the surface functional groups of pigment particles.

The present invention also relates to aqueous ink compositions which include those polymeric dispersants. Specifically, the dispersant compositions of the present invention for use in ink jet printers comprises from about 0.1 % to about 10% of an insoluble pigment, from about 0.1% to about 10% of the polymeric dispersant described above, and an aqueous carrier.

All percentages and ratios, used herein, are "by weight" unless otherwise specified. All molecular weights, used herein, are weight average molecular weights unless otherwise specified. As used herein, "pigment" refers to an insoluble colorant (including organic and inorganic pigments.)

Further details and advantages of the present invention are set forth below in the following more detailed description.

### DETAILED DESCRIPTION OF THE INVENTION

The present invention relates to graft polymeric dispersants used to stabilize aqueous pigment ink compositions, as well as pigment ink compositions containing those dispersants. The graft polymers of the present invention preferably have an average weight molecular weight of from about 3,000 to about 13,000, more preferably of from about 5,000 to about 9,000. The graft polymers exhibit favorable interactions with pigment particles and with gelatin coatings. These favorable interactions serve to increase the smear resistance of the dispersion relative to conventional pigment dispersions. Also, the chroma and waterfastness of the dispersions is improved. Finally, the graft polymers provide for the production of pigment inks having improved stability, flexibility for ink formation, and excellent print quality as compared to conventional inks with conventional pigment dispersions.

Smear resistance on photo paper, especially on gelatin paper, is a significant problem for pigmented inks comprising a pigment dispersion. Most gelatin paper is designed for use with dye based inks. When conventional pigmented inks are printed on gelatin based paper, the pigmented dispersion remains on the surface of the gelatin coating and is susceptible to smearing or smudging. Increasing the amount of the hydrophilic portion, such as methacrylic acid, of the polymeric dispersant has been found to reduce the smear characteristics of pigmented inks on gelatin paper. But, increasing the amount of the hydrophilic portion can reduce the waterfastness of the pigmented inks and can reduce the gloss of the gelatin paper. As a result, a polymer comprising hydrophobic monomeric units that possess a similar hydrogen bonding ability of to that of typical hydrophilic monomeric units was needed. By retaining the ability to hydrogen bond, the hydrophobic monomeric units of the present invention increase the overall interaction of the polymer with gelatin coatings. At the same time, the waterfastness of the pigmented inks is not necessarily sacrificed. In addition, the hydrogen bonding ability of the hydrophobic monomeric units can increase the overall interaction of the polymer with pigments.

The polymers of the present invention are graft copolymers comprising monomers having electron rich aromatic functional groups, which exhibit favorable interactions with the surface functional groups of pigment particles. The graft polymers of the present invention comprise at least three distinct segments: a hydrophilic polymeric segment; a hydrophobic polymeric segment comprising an hydroxyalkyl methacrylate or an hydroxyalkyl acrylate; and a stabilizing polymeric segment comprising an aromatic group. Each of these segments is described in detail below.

The hydrophilic polymeric segment of the graft polymer comprises a hydrophilic monomeric unit and is responsible for controlling polymer solubility in the ink composition. Therefore, a monomer containing hydrophilic functional groups is preferred to ensure adequate solubility. Suitable hydrophilic functional groups will be known to those skilled in the art. Hydrophilic functional groups that can ensure adequate solubility include carboxylic acid groups, sulfonic acid groups, phosphate groups, and amino groups. The hydrophilic polymeric segment may comprise acrylic acid, methacrylic acid, acrylamidoalkylsulfonic acid, styrene sulfonic acid, or other acid, amide or amine (quaternary amine) containing monomers. In an embodiment, the hydrophilic polymeric segment comprises a methacrylic acid (MAA) polymer, or a copolymer thereof. In other embodiments, the hydrophilic segment may comprise a methacrylic acid copolymer with another monomer, such as styrene sulfonic acid. Other suitable polymeric monomers will be known to those skilled in the art. Suitable monomers are preferably those which do not interfere with the hydrophilic character of the segment. Different acid or amine groups may be used together. Longer hydrophilic segments help to ensure that the hydrophilic polymeric segment stabilizes the dispersant. The hydrophilic polymeric segment must be long and present in a high enough mole % such that it can provide a stabilizing function to the graft polymer dispersant in an aqueous ink formulation. The hydrophilic polymeric segment should also maintain gloss when printing on photo paper.

In embodiments, the number of hydrophilic monomeric units ranges from 4 to 40 units. In preferred embodiments, the mole % of hydrophilic monomeric units ranges from about 18 to 84%. In other preferred embodiments, the mole % of hydrophilic monomeric units is about 50%. In a preferred embodiment, the graft polymer of the present invention comprises a hydrophilic segment comprising a hydrophilic monomeric unit comprising methacrylic acid.

The hydrophobic polymeric segment comprises a hydrophobic monomeric unit comprising an hydroxyalkyl methacrylate or an hydroxyalkyl acrylate. The present invention has found that having a hydrophobic polymeric segment that possesses the ability to form hydrogen bonding increases the overall interaction of the polymer with gelatin coatings and increases resistance to smear. At the same time, the waterfastness of the pigmented inks is not necessarily sacrificed. In addition, the hydrogen bonding ability of the hydrophobic polymeric segment can increase the overall interaction of the graft polymer with pigments. Suitable hydroxyalkyl methacrylates include 2-hydroxyethyl methacrylate, 3-hydroxypropyl methacrylate, 4-hydroxybutyl methacrylate, 2-hydroxypropyl methacrylate, 2-hydroxybutyl methacrylate, and 3-hydroxybutyl methacrylate. Suitable hydroxyalkyl acrylates include 2-hydroxyethyl acrylate, 3-hydroxypropyl acrylate, 4-hydroxybutyl acrylate, 2-hydroxypropyl acrylate, 2-hydroxybutyl acrylate, and 3-hydroxybutyl acrylate. In an embodiment, the hydrophobic segment comprises 2-hydroxyethyl methacrylate. In preferred embodiments, the mole % of hydroxyalkyl methacrylate or hydroxyalkyl acrylate ranges from about 13 to 50%. In other preferred embodiments, the mole % of hydroxyalkyl methacrylate or hydroxyalkyl acrylate is about 30%.

The stabilizing polymeric segment is responsible for anchoring the graft polymeric dispersant to a pigment particle. The stabilizing polymeric segment comprises a stabilizing monomer unit comprising an aromatic functional group. The stabilizing monomer units may have a molecular weight of from about 100 to about 2000, preferably from about 400 to about 1,600. The stabilizing monomer units include a moiety that enables it to polymerize into the remainder of the graft polymer. This can be accomplished through a vinyl ester group such as an acrylate, methacrylate, or crotonate group. Preferred stabilizing segments are polymerized into the remainder of the graft polymer through the inclusion of an acrylate group or a methacrylate group. In embodiments of the graft polymers, the mole % of any particular stabilizing monomer unit ranges from about 1.5 to 50%. In preferred embodiments, the mole % of any particular stabilizing monomer unit is about 20%.

In addition to a moiety that enables it to polymerize into the remainder of the graft polymer, a stabilizing monomeric unit comprises a hydrophobic head and a hydrophilic tail. The hydrophobic head comprises an electron rich aromatic functional group capable of stabilizing the pigment dispersion. In an embodiment of the stabilizing segment, the hydrophobic head of a stabilizing monomeric unit comprises the formula: 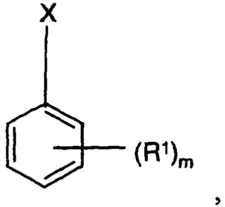 wherein m is an integer from 1 to 3, X comprises a linker group, preferably -O-, -NH- or -S-, and each R¹ independently comprises a hydroxy, -C₁-C₉ alkyl, -C₁-C₉ alkylene-aryl, or heteroaryl group. Examples of a -C₁-C₉ alkyl groups include, but are not limited to, methyl, n-butyl, t-butyl, n-pentyl, isobutyl, isopropyl, n-pentyl, hexyl, octyl, isooctyl, nonyl, and the like. Examples of -C₁-C₉ alkylene-aryl groups include, but are not limited to, 1-phenylethylene. Examples of heteroaryl groups include, but are not limited to, furan, thiophene, pyrrole, imidazole, pyrazole, triazole, tetrazole, thiazole, oxazole, isoxazole, oxadiazole, thiadiazole, isothiazole, pyridine, pyridazine, pyrazine, pyrimidine, quinoline, isoquinoline, quinazoline, benzofuran, 1,2,3-benzotriazole, indole, and indazole, and the like. The hydrophilic tail comprises a -(OCH₂CH₂)ₙ- or -[OCH(CH₃)CH₂]ₙ- group, wherein n is from 0 to 50. One end of the hydrophilic tail is bonded to the hydrophobic head through the linker group X and the other end of the hydrophilic tail is bonded to a moiety that enables the stabilizing monomeric unit to polymerize with the remainder of the graft polymer.

Examples of stabilizing monomeric units include, but are not limited to, nonylphenoxy poly(propyleneoxy)-acrylate (containing from 1 to about 40 moles of propylene oxide), nonylphenoxy poly(propyleneoxy)-methacrylate (containing from 1 to about 40 moles of propylene oxide), nonylphenoxy poly(propyleneoxy)-crotonate (containing from about 5 to about 40 moles of propylene oxide), bis-[nonylphenoxy poly(propyleneoxy)]-fumarate (containing from about 5 to about 40 moles of propylene oxide), phenoxypoly(propyleneoxy) acrylate (containing from about 5 to about 40 moles of propylene oxide), 2,4,6-tris-(1-phenylethyl)phenoxy poly(ethyleneoxy) methacrylate and its di- and mono- derivates (containing from about 1 to about 40 moles of ethylene oxide). Mixtures of these materials may be used.

Preferred stabilizing segments which may be used in the graft polymers of the present invention include nonylphenol acrylate, nonylphenol methacrylate, nonylphenoxy poly(propyleneoxy)ₙ methacrylate, wherein n is from 1 to about 40, preferably from 2 to about 15; nonylphenoxy poly(propyleneoxy)ₙ acrylate, wherein n is from 1 to about 40, preferably from about 2 to about 15; 2,4,6-tris-(1-phenylethyl)phenoxy poly(ethyleneoxy)ₙ methacrylate and its di- and mono- derivatives, wherein n is from 1 to about 40, preferably from about 2 to 25.

In particularly preferred embodiments, R¹ comprises a nonyl group or a 1-phenylethylene group, X comprises -0-, and n is from 2 to 25. In embodiments where R¹ comprises a nonyl group, the hydrophilic tail preferably comprises a -[OCH(CH₃)CH₂]ₙ-group, m is 1, and n is from 2 to 5. In embodiments where R¹ comprises a styrene group (i.e., 1-phenylethylene), the hydrophilic tail preferably comprises a -(OCH₂CH₂)ₙ- group, m is 3, and n is 25. Examples of preferred stabilizing monomeric units include, but are not limited to, SIPOMER/SEM 25^{™} (tristyrylphenol polyethyleneoxy methacrylate), purchased from Rhodia Inc.; 2,4,6-tris-(1-phenylethyl)phenoxy poly(ethyleneoxy) methacrylate and its di-and mono- derivates; and nonylphenoxy poly(propyleneoxy) acrylates, obtainable from Toagosei Company under the product name M-117.

It is noted herein that the end groups on the dispersants of this invention are not limited. For illustrative purposes, they can include thio-substituted hydrocarbons, as well as hydrogen. Moreover, it is also noted, however, that it is within the scope of this invention for all structural monomer units represented herein to be randomly dispersed throughout the polymer backbone.

In another embodiment of the present invention, the graft polymer comprises randomly distributed monomer units, wherein the hydrophilic polymeric segment comprises monomer units of the formula: 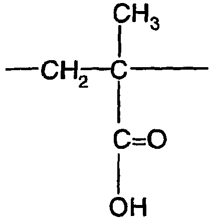 wherein the monomer is present in 18 to 84 mole %, preferably 50 mole %;
wherein the hydrophobic polymeric segment comprises monomer units of the formula; 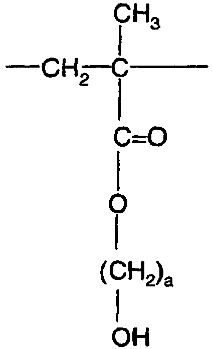 wherein a is an integer from 1 to 9, preferably 2, and the monomer is present in 13 to 50 mole %, preferably 30 mole %;
wherein the stabilizing polymeric segment comprises monomer units of formulae: 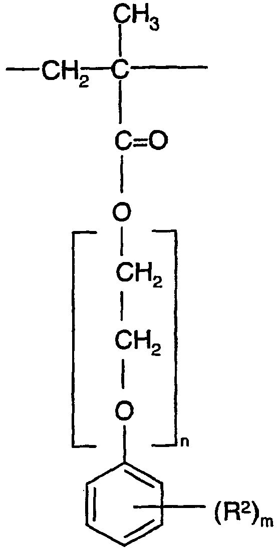 wherein n is an integer from 1 to 25, preferably 25; m is an integer from 1 to 3; preferably 3; and each R² independently comprises a C₁-C₉ alkyl, or -C₁-C₉ alkylene-aryl group, provided that at least one of said R² comprises a -C₁-C₉ alkylene-aryl group, R² preferably comprises 1-phenylethyl; and the monomer is present in 1.5 to 50 mole %, preferably 20 mole %; and 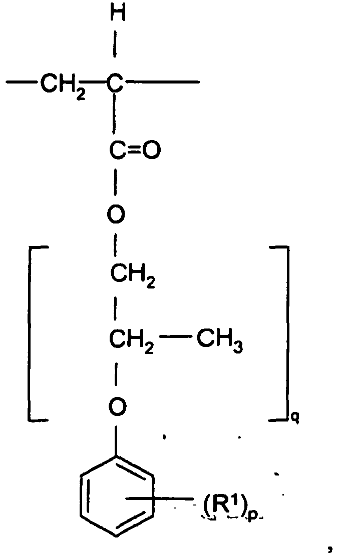 wherein q is an integer from 2 to 5; p is an integer from 1 to 3, preferably 1; and each R¹ independently comprises a C₁-C₉ alkyl, or -C₁-C₉ alkylene-aryl group, provided that at least one of said R¹ comprises a -C₁-C₉ alkyl group, R¹ preferably comprises nonyl; and the monomer is present in 1.5 to 50 mole %, preferably 20 mole %.

The graft copolymers of the present invention can be made by standard synthetic techniques such as those described in Odian's Principles of Polymerization, 3rd Edition, John Wiley and Sons, Inc. (1991). Free radical polymerization is the preferred method of synthesis. The specified monomer poly(ethylene glycol) 2,4,6-tris(1-phenylethyl)phenyl ether methacrylate and its di- and mono- derivatives may also be purchased from Rhodia Inc. as SIPOMER/SEM 25^{™}, or synthesized from SynFac® (Milliken Inc.) or SOPROPHOR^{™} (Rhodia Inc.) through conventional synthetic methods. Also, nonylphenoxy poly(propyleneoxy) acrylates are obtained from Toagosei Company.

The free radical polymerization reaction utilizes initiators and chain transfer agents to control the polymer molecular weight and terminate the reaction. Any conventional free radical initiator and chain transfer agent materials known in the art may be used in the present invention as long as they are compatible with the reactants being utilized. Suitable free radical initiators include the azo-type and peroxide-type initiators. Preferred azo-type initiators include dimethyl 2,2'-azobisisobutyrate, and AIBN^{™} (Dupont). Suitable chain transfer agents include C₁ - C₂₀ alkylthiol groups, preferably C₈-C₁₂ alkylthiol groups. Particularly preferred is n-C₁₂ thiol. Other appropriate chain transfer agents include phenylalkyl mercaptans, or 3-mercapto-1,2-propanediol.

Ink compositions of the present invention comprise the graft polymer dispersant compositions of the present invention, an insoluble pigment, and an aqueous carrier. A wide variety of organic and inorganic pigments, alone or in combination, may be selected for use in the aqueous inks of the present invention. The key selection criterion for a pigment are that it must be dispersible in the aqueous medium with the aid of the graft polymer of the present invention. The term "pigment", as used herein, means an insoluble colorant. The selected pigment may be used in dry or wet form.

The aqueous ink compositions of the present invention comprise from about 0.1% to about 10% of an insoluble pigment, from about 0.1% to about 10%, preferably from about 0.5% to about 5%, of the graft polymer dispersant described above, and an aqueous carrier.

Thus, the aqueous ink compositions of the present invention comprise the graft polymer dispersant compositions of the present invention, an insoluble pigment, and an aqueous carrier, wherein the graft polymer dispersant comprises a hydrophilic polymeric segment; a hydrophobic polymeric segment comprising an hydroxyalkyl methacrylate or an hydroxyalkyl acrylate; and a stabilizing segment comprising an aromatic group.

The amount of pigment used in the aqueous inks may vary depending on their structure, but generally the pigments are used in a range of from about 0.1 % to about 10%, preferably of from about 2 to about 6%, by weight of the ink composition. The pigment to dispersant (weight) ratio is preferably about 1:1, but may vary from about 1:1 to about 9:1.

Suitable pigments include organic and inorganic pigments of a particle size sufficient to permit free flow of the ink through the ink jet printing device, especially at the ejecting nozzles that usually have a diameter ranging from about 10 microns to 50 microns. Thus, a suitable pigment particle size is from about 0.05 to about 15, preferably from about 0.05 to about 5, and more preferably from about 0.05 to about 0.5, microns. Pigments suitable for use in the present invention include azo pigments, such as azo lakes, insoluble azo pigments, condensed azo pigments and chelate azo pigments, polycyclic pigments, perylene pigments, anthraquinone pigments, quinacridone pigments, dioxazine pigments, thioindigo pigments, isoindolinone pigments, quinophthalone pigments, and dry lakes. Suitable organic pigments include nitro pigments, nitroso pigments, aniline black and daylight fluorescent pigments. Preferred pigments include carbon black, Pigment Red 122, Pigment Red 202, Pigment Yellow 74, Pigment Yellow 128, Pigment Yellow 138, Pigment Yellow 155, Pigment Blue 15:3 and Pigment Blue 15:4.

The third component of the aqueous ink composition of the present invention is the aqueous carrier medium which is generally present at from about 70% to about 99% of the composition. The aqueous carrier medium comprises water (preferably deionized water) and, preferably, at least one water soluble organic solvent. Selection of a suitable carrier mixture depends on the requirements of the specific application involved, such as desired surface tension and viscosity, the selected pigment, the desired drying time of the ink, and the type of paper onto which the ink will be printed. Representative examples of water soluble organic solvents that may be selected include (1) alcohols, such as methyl alcohol, ethyl alcohol, n-propyl alcohol, isopropyl alcohol, n-butyl alcohol, sec-butyl alcohol, t-butyl alcohol, isobutyl alcohol, furfuryl alcohol, and tetrahydrofurfuryl alcohol; (2) ketones or ketoalcohols, such as acetone, methyl ethyl ketone and diacetone alcohol; (3) ethers, such as tetrahydrofuran and dioxane; (4) esters, such as ethyl acetate, ethyl lactate, ethylene carbonate and propylene carbonate; (5) polyhydric alcohols, such as ethylene glycol, diethylene glycol, triethylene glycol, propylene glycol, tetraethylene glycol, polyethylene glycol, glycerol, 2-methyl-2,4-pentanediol, 1,2,6-hexanetriol and thiodiglycol; (6) lower alkyl mono- or di-ethers derived from alkylene glycols, such as ethylene glycol monomethyl (or monoethyl) ether, diethylene glycol monomethyl (or monoethyl) ether, propylene glycol monomethyl (or monoethyl) ether, triethylene glycol monomethyl (or monoethyl) ether and diethylene glycol dimethyl (or diethyl) ether; (7) nitrogen-containing cyclic compounds, such as pyrrolidone, N-methyl-2-pyrrolidone, and 1,3-dimethyl-2-imidazolidinone; and (8) sulfur-containing compounds, such as dimethyl sulfoxide and tetramethylene sulfone. Other useful organic solvents include lactones and lactams. Mixtures of these solvents may be used in the present invention.

The aqueous ink compositions of the present invention may further comprise a humectant mixture. Preferred humectants include, but are not limited to, bis-hydroxy terminated thioethers, lactams, and polyalkylene glycols. The amount of humectant in an ink formulation can range from 0 to 40 weight percent, preferably from 15 to 25 weight percent.

The ink compositions may further comprise surfactants to modify the surface tension of the ink and to control the penetration of the ink into the paper. Such surfactants are included in the ink compositions, and are not a component of the dispersant. Suitable surfactants include, but are not limited to, nonionic, amphoteric and ionic surfactants. Preferred surfactants include, but are not limited to, alkyl sulfate, nonyl phenyl polyethylene glycol, SILWET ® (OSI Sealants, Inc.), TERGITOL® (Union Carbide) and SURFYNOL® (Air Products and Chemicals, Inc.).

Other additives, such as biocides, viscosity modifiers, penetrants, anti-kogation agents, anti-curling agents, chelating agents, anti-bleed agents, binders and buffers may be added to the ink composition at their art established levels. A preferred biocide includes, but is not limited to, Proxel® GXL (Zeneca).

The process for preparing pigmented ink jet inks typically requires that the links have their particles reduced in size using a grinding mill. The mean volume pigment particle size is normally less than about 200 nm, preferably less than about 140 nm. This particle size requirement is achieved by extensive shearing of the pigment particles using small grinding media. Useful grinding media includes spherical ceramic particles having a highly smooth and uniform exterior surface, a high density and high hardness. A preferred grinding medium for use in preparing the inks of the present invention is the material commercially available under the name YTZ Ceramic Beads, commercially available from S. E. Firestone Associates, Philadelphia, Pa. and manufactured by Nippon Kagaku Togyo.

In another aspect, the present invention provides a composition comprising a pigment and a graft polymer as described above. Thus, the present invention provides a composition comprising a pigment and a graft polymer comprising a hydrophilic polymeric segment; a hydrophobic polymeric segment comprising a hydrophobic monomeric unit comprising a hydroxyalkyl methacrylate ester; and a stabilizing segment comprising an aromatic functional group.

In another aspect, the present invention provides an ink set comprising at least one aqueous ink composition comprising a pigment and a graft polymer as described above. Thus, the present invention provides an ink set comprising at least one aqueous ink composition comprising from about 0.1% to about 10% of a pigment, and from about 0.1% to about 10% of a graft polymer comprising: a hydrophilic polymeric segment; a hydrophobic polymeric segment comprising a hydrophobic monomeric unit comprising a hydroxyalkyl methacrylate ester; and a stabilizing segment comprising an aromatic functional group.

### EXAMPLES

The following examples are detailed descriptions of methods of preparation and use of the polymeric dispersants and the ink compositions of the present invention. The detailed descriptions fall within the scope of, and serve to exemplify, the more general description set forth above. The examples are presented for illustrative purposes only, and are not intended as a restriction on the scope of the invention.

### EXAMPLE 1

A graft polymer dispersant of the present invention is made as follows. A solution of methacrylic acid 24.0 g (0.28 mol), 2-hydroxyethyl methacrylate 20.0 g (0.153 mol), 4-nonylphenol poly(propyleneoxy) acrylate 45.0 g (0.11 mol), and dodecanethiol 4.0 g (0.02 mol), dimethyl 2,2'-azobisisobutyrate (V-601™) from Waco Chemical & Supply Co. 0.3 g are mixed in 75 mL isopropanol in a three neck round bottom flask which is equipped with a mechanical stirrer, a condenser and a thermometer. The chemicals are mixed together and degassed with nitrogen by repeated partial evacuation followed by nitrogen backfill using a Firestone Valve. The flask is back filled with the nitrogen, then immersed, in an oil bath and heated to about 75° C for about 18 hours. A viscose solution is formed. The solution is dried in an explosion proof oven and the molecular weight is determined by gel permeation chromatography. The Mw of the resultant dried solution is about 8211 and the Mn is about 4523.

The polymer dispersant stock solution is prepared in the following manner: The dried powder of the dispersant is dissolved in deionized water with heating. The temperature is controlled below 50° C, the pH is adjusted to 7.5 by addition of 20% KOH drop wise. EXAMPLES 2-20

The polymers of examples 2 - 20 (see table 1) were prepared using the procedure described in example 1, except that the amounts of monomers listed in table 1 were used. In table 1, MAA represents methacrylic acid monomer, HEMA represents 2-hydroxyethyl acrylic acid monomer, Nonyl-ppg represents 4-nonylphenol poly(propyleneoxy), acrylate (N=2-5), Tristyrene-peg represents poly(ethylene glycol), 2,4,6-tris(1-phenylethyl)phenyl ether methacrylate (N=25), Norbloc represents 2(2'-hydroxy-5'methacryloxyethylphenyl)-2H-benzotriazole, and the chain transfer reagent is dodecanethiol.

**Table 1.**

| | **Monomer Ingredients** | | | | | | |
|---|---|---|---|---|---|---|---|
| Ex. | MAA (mol) | HEMA (mol) | Nonyl-ppg (mol) | Tristyrene-peg (mol) | Norbloc (mol) | Chain Transfer reagent (mole %) | mw |
| 2 | 0.3 | 0.1 | 0.1 | | | 3.7 | 4682 |
| 3 | 0.3 | 0.2 | 0.12 | | | 3.7 | 8247 |
| 4 | 0.3 | 0.2 | 0.097 | | | 3.8 | 7489 |
| 5 | 0.3 | 0.2 | 0.12 | | | 3.3 | 6727 |
| 6 | 0.13 | 0.06 | 0.06 | 0.008 | | 6.58 | 5975 |
| 7 | 0.13 | 0.06 | 0.09 | 0.008 | | 6.59 | 6491 |
| 8 | 0.186 | 0.06 | 0.06 | 0.016 | | 5.3 | 7487 |
| 9 | 0.186 | 0.06 | 0.06 | 0.03 | | 5.05 | 10333 |
| 10 | 0.186 | 0.09 | 0.05 | 0.03 | | 4.7 | 10276 |
| 11 | 0.22 | 0.03 | 0.06 | 0.03 | | 6.06 | 8906 |
| 12 | 0.18 | 0.18 | | 0.016 | | 3.5 | 7489 |
| 13 | 0.18 | 0.18 | | 0.03 | | 3.3 | 11414 |
| 14 | 0.18 | 0.3 | | 0.03 | | 3.3 | 10846 |
| 15 | 0.28 | | | 0.015 | 0.06 | 5.5 | 5842 |
| 16 | 0.28 | | | 0.03 | 0.06 | 5.4 | 7550 |
| 17 | 0.21 | 0.06 | | 0.02 | 0.06 | 5.7 | 6720 |
| 18 | 0.186 | 0.06 | | 0.024 | 0.048 | 5.3 | 7846 |
| 19 | 0.23 | 0.06 | | 0.03 | 0.048 | 5.4 | 7829 |
| 20 | 0.18 | 0.06 | | 0.032 | 0.048 | 5.3 | 8535 |

Each dispersant described in Examples 1-20 passed an oven stability test conducted at 60° C for 90 days.

### EXAMPLE 21

An ink composition was prepared using the graft polymer dispersant described in Example 1.

Using the dispersant solution prepared according to the procedure in Example 1, a dispersant was prepared by mixing the dispersant solution with a pigment at a pigment-to-dispersant ratio of 1:1. The pigment and dispersant solution were mixed in a mechanical stirrer until no lumps were visible. The total percent solids of the dispersant solution was controlled at 20%. The mixture was then dispersed by an attrition process using a Szegvari attritor model 01 std with YTZ ceramic beads. The attrition process was typically performed for a minimum of five hours. However, longer times at controlled temperature can also be used. The pH was adjusted with 20% KOH solution to maintain the pH at 7.5. The dispersion particle size was <150 nm, as determined by Leeds and Northrop Microtrac UPA 150 measurement. The solution was then diluted to a final premix of 12-15% solids.

The ink was prepared by mixing 3% pigment by weight of the final premix with 5% by weight of 2-pyrrolidone, 5% by weight of polyethylene glycol (Mw 1000), 5% by weight ofthioldiethanol, 1% by weight of 1,2-hexanediol, and the balance being deionized water.

### EXAMPLE 22

An ink composition was prepared using the same procedure as for the ink in Example 21, except the graft polymer of Example 2 was used as dispersant.

### EXAMPLE 23

An ink composition was prepared using the same procedure as for the ink in Example 21, except the graft polymer of Example 3 was used as dispersant.

### EXAMPLE 24

An ink composition was prepared using the same procedure as for the ink in Example 21, except the graft polymer of Example 4 was used as dispersant.

### EXAMPLE 25

An ink composition was prepared using the same procedure as for the ink in Example 21, except the graft polymer of Example 8 was used as dispersant.

### EXAMPLE 26

The inks in Examples 21 - 25 were printed and tested on various media. The results are summarized in table 2.

**Table 2**

| | **Media** | **Ex. 21** | **Ex. 22** | **Ex. 23** | **Ex. 24** | **Ex. 25** | **Comparative Pigment** | **Comparative Dye** |
|---|---|---|---|---|---|---|---|---|
| **200% L** | Glossy | 50 | 49.3 | 50.7 | | 50.0 | 55.3 | 51.3 |
| **200% C** | Glossy | 85.5 | 87.3 | 85.1 | 86.0 | 85.7 | 78.5 | 86.4 |
| | | | | | | | | |
| **100% L** | Glossy | 61.2 | 61.2 | 63.1 | 60.6 | 61.5 | 67.8 | 51.3 |
| **100% C** | Glossy | 72.5 | 73.7 | 69.6 | 73.5 | 72.9 | 61.7 | 86.4 |
| | | | | | | | | |
| **200% OD** | Plain 1 | 0.9 | 0.86 | 0.83 | 0.88 | 0.93 | 0.83 | 1.07 (100%) |
| **200% OD** | Plain 2 | 0.86 | 0.90 | 0.87 | 0.92 | 0.95 | 0.84 | 1.07 (100%) |
| | | | | | | | | |
| **Smear** | Glossy | 0.8 | 0.8 | 1.2 | 1 | 1.5 | 3 | 0 |
| **Waterfastness** | Plain 1 | A | A | A | A | C | A | E (100%) |

In table 2, L and C represent color metrics and were measured using a Minolta Spectrometer, D65 source, 10 degrees aperture. Smear was graded qualitatively on a scale from 0 to 5, with 0 representing exceptional smear resistance and 5 representing poor smear resistance. Waterfastness was graded qualitatively after printed images were allowed to dry for 5 minutes and then submerged in water for 1 minute. Waterfastness was graded on a scale from A to E, with A representing exceptional waterfastness and E representing poor waterfastness.

The 100% and 200% in table 2 represents coverage, with 100% representing 600 dpi and 200% representing 1200 dpi.

Glossy media refers to Kodak premium glossy paper. Plain 1 media refers to Hammermill laser paper. Plain 2 media refers to Cascade X-9000 plain paper.

The comparative pigment ink was formulated using the same recipe as the one listed in Example 21 above with the exception that the dispersant used is the dispersant disclosed in U.S. Patent No. 6,225,370. The comparative dye ink was formulated using a standard ink formulation with magenta dye disclosed in U.S. Patent No. 5,254,160.

## Claims

1. A graft polymer comprising:
(a) a hydrophilic polymeric segment;
(b) a hydrophobic polymeric segment comprising a hydrophobic monomeric unit comprising an hydroxyalkyl methacrylate or an hydroxyalkyl acrylate; and
(c) a stabilizing polymeric segment comprising an aromatic functional group, wherein the stabilizing polymeric segment comprises a stabilizing monomeric unit comprising nonylphenol acrylate; nonylphenol methacrylate; nonylphenoxy poly(propyleneoxy)ₙ methacrylate, wherein n is from 1 to about 40; nonylphenoxy poly(propyleneoxy)ₙ acrylate, wherein n is from 1 to about 40; or 2,4,6-tris-(1-phenylethyl)phenoxy poly(ethyleneoxy)ₙ methacrylate, wherein n is from about 1 to about 40; or wherein the stabilizing polymeric segment comprises a stabilizing monomeric unit comprising
(a) a hydrophobic head of the formula: 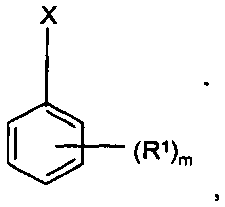 wherein m is an integer from I to 3, X comprises a linker group comprising -0-, - NH- or -S-, and each R¹ independently comprises a hydroxy, -C₁-C₉ alkyl, -C₁-C₉ alkylene-aryl, or heteroaryl group; and
(b) a hydrophilic tail comprising a -(OCH₂CH₂)ₙ- or -[OCH(CH₃)CH₂]ₙ- group, wherein n is from 0 to 50, wherein the hydrophilic tail is bonded to the hydrophobic head through the linker group X and the other end of the hydrophilic tail is bonded to,a vinyl ester group moiety.

2. The graft polymer of claim 1, wherein the hydrophilic polymeric segment comprises methacrylic acid or acrylic acid.

3. The graft polymer of claim 1, wherein the hydrophilic polymeric segment comprises from about 18 to 84 mole % of the graft polymer.

4. The graft polymer of claim 3, wherein the hydrophilic polymeric segment comprises about 50 mole % of the graft polymer.

5. The graft polymer of claim 1, wherein the hydrophobic polymeric segment comprises 2-hydroxyethyl methacrylate.

6. The graft polymer of claim 1, wherein the hydrophobic polymeric segment comprises from about 13 to 50 mole % of the graft polymer.

7. The graft polymer of claim 1, wherein the hydrophobic polymeric segment comprises about 30 mole % of the graft polymer.

8. The graft polymer of claim 1, wherein the stabilizing polymeric segment comprises nonylphenoxy poly(propyleneoxy)ₙ acrylate, wherein n is from about 2 to about 15.

9. The graft polymer of claim 1, wherein the stabilizing polymeric segment comprises 2,4,6-tris-(1-phenylethyl) phenoxy poly(ethyleneoxy)ₙ methacrylate, wherein n is from about 2 to 25.

10. The graft polymer of claim 1, wherein the stabilizing polymeric segment comprises from about 1.5 to 60 mole % of the graft polymer.

11. The graft polymer of claim 1, wherein the stabilizing polymeric segment comprises about 20% of the graft polymer.

12. The graft polymer of claim 1, wherein m is from 1 to 3, R' comprises a nonyl group or a 1-phenylethylene group, X comprises -0-, and n is from 2 to 25.

13. The graft polymer of claim 12, wherein m is 1, R¹ comprises a nonyl group, the hydrophilic tail comprises a -[OCH(CH₃)CH₂]ₙ- group, and n is from 2 to 5.

14. The graft polymer of claim 12, wherein m is 3, R¹ comprises a 1-phenylethylene group, the hydrophilic tail comprises a -(OCH₂CH₂)ₙ- group, and n is 25.

15. The graft polymer of claim 1, comprising randomly distributed monomer units wherein
the hydrophilic polymeric segment comprises monomer units of the formula: 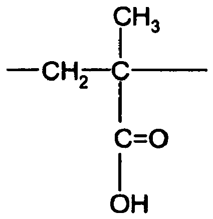 wherein the monomer is present in 18 to 84 mole %;
wherein
the hydrophobic polymeric segment comprises monomer units of the formula: 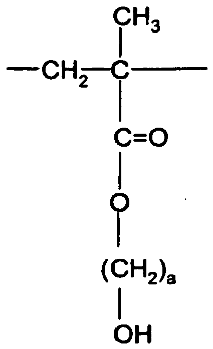 wherein a is an integer from 1 to 9, and the monomer is present in 13 to 50 mole %;
wherein
the stabilizing polymeric segment comprises monomer units of the formulae: 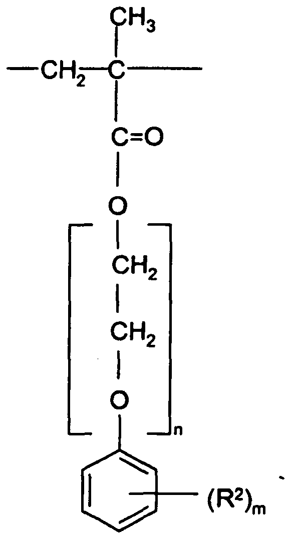 wherein n is an integer from 1 to 25; m is an integer from 1 to 3; and each R² independently comprises a C₁-C₉ alkyl, or -C₁-C₉ alkylene-aryl group, provided that at least one of said R² comprises a -C₁-C₉ alkylene-aryl group; and the monomer is present in 1.5 to 50 mole %; and 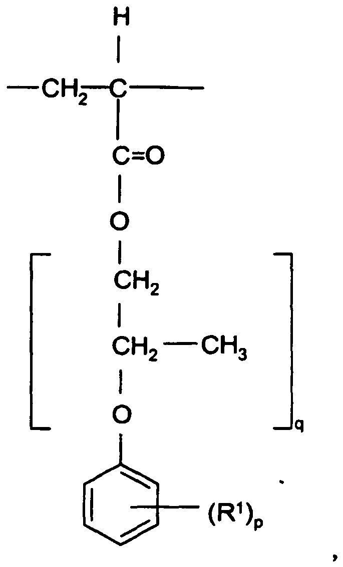 wherein q is an integer from 2 to 5; p is an integer from 1 to 3; and each R¹ independently comprises a C₁-C₉ alkyl, or -C₁-C₉ alkylene-aryl group, provided that at least one of said R¹ comprises a -C₁-C₉ alkyl group; and the monomer is present in 1.5 to 50 mole %.

16. The graft polymer of claim 15, wherein a is 2, n is 25, m is 3, q is from about 2 to 5, p is 1, R¹ comprises nonyl, and R² comprises 1-phenylethyl.

17. The graft polymers of claim 1, wherein the graft polymer has a weight average molecular weight from about 3,000 to about 13,000.

18. The graft polymers of claim 17, wherein the graft polymer has a weight average molecular weight from about 5,000 to about 9,000.

19. An aqueous ink composition for ink jet printers comprising from about 0.1 % to about 10% of a pigment, and from about 0.1 % to about 10% of a graft polymer as defined in any one of claims 1 to 18.

## Patentansprüche

1. Pfropfpolymer, umfassend:
(a) ein hydrophiles Polymersegment;
(b) ein hydrophobes Polymersegment, das eine hydrophobe Monomereinheit umfasst, die ein Hydroxyalkylmethacrylat oder ein Hydroxyalkylacrylat umfasst; und
(c) ein stabilisierendes Polymersegment, das eine aromatische funktionelle Gruppe umfasst, wobei das stabilisierende Polymersegment eine stabilisierende Monomereinheit umfasst, die Nonylphenolacrylat; Nonylphenolmethacrylat; Nonylphenoxypoly(propyleneoxy)ₙ-methacrylat, worin n von 1 bis etwa 40 ist; Nonylphenoxypoly(propyleneoxy)ₙ-acrylat, worin n von 1 bis etwa 40 ist; oder 2,4,6-Tris-(1-phenyl-ethyl)phenoxypoly(ethylenoxy)ₙ-methacrylat umfasst, worin n von etwa 1 bis etwa 40 ist; oder worin das stabilisierende Polymersegment eine stabilisierende Monomereinheit umfasst, die Folgendes umfasst
(a) einen hydrophoben Kopf der Formel: 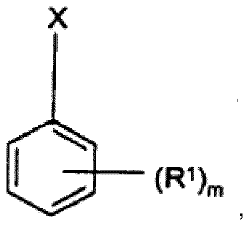 worin m eine ganze Zahl von 1 bis 3 ist, X eine Linker-Gruppe umfasst, die -O-, -NH- oder -S- umfasst und jedes R¹ unabhängig eine Hydroxy-, -C₁-C₉-Alkyl-, -C₁-C₉-Alkylenaryl- oder Heteroarylgruppe umfasst; und
(b) einen hydrophilen Schwanz, der eine -(OCH₂CH₂)ₙ- oder - [OCH(CH₃)CH₂]ₙ-Gruppe umfasst, worin n von 0 bis 50 ist, worin der hydrophile Schwanz an den hydrophilen Kopf durch die Linker-Gruppe X gebunden ist und das andere Ende des hydrophilen Schwanzes an eine Vinylestergruppeneinheit gebunden ist.

2. Pfropfpolymer nach Anspruch 1, wobei das hydrophile Polymersegment Methacrylsäure oder Acrylsäure umfasst.

3. Pfropfpolymer nach Anspruch 1, wobei das hydrophile Polymersegment von etwa 18 bis 84 Mol-% des Pfropfpolymers umfasst.

4. Pfropfpolymer nach Anspruch 3, wobei das hydrophile Polymersegment etwa 50 Mol-% des Pfropfpolymers umfasst.

5. Pfropfpolymer nach Anspruch 1, wobei das hydrophobe Polymersegment 2-Hydroxyethylmethacrylat umfasst.

6. Pfropfpolymer nach Anspruch 1, wobei das hydrophobe Polymersegment von etwa 13 bis 50 Mol-% des Pfropfpolymers umfasst.

7. Pfropfpolymer nach Anspruch 1, wobei das hydrophobe Polymersegment etwa 30 Mol-% des Pfropfpolymers umfasst.

8. Pfropfpolymer nach Anspruch 1, wobei das stabilisierende Polymersegment Nonylphenoxypoly(propyleneoxy)ₙ-acrylat umfasst, worin n von etwa 2 bis etwa 15 ist.

9. Pfropfpolymer nach Anspruch 1, wobei das stabilisierende Polymersegment 2,4,6-Tris-(1-phenylethyl)phenoxypoly(ethylenoxy)ₙ-methacrylat umfasst, worin n von etwa 2 bis etwa 25 ist.

10. Pfropfpolymer nach Anspruch 1, wobei das stabilisierende Polymersegment von etwa 1,5 bis 60 Mol-% des Pfropfpolymers umfasst.

11. Pfropfpolymer nach Anspruch 1, wobei das stabilisierende Polymersegment etwa 20 % des Pfropfpolymers umfasst.

12. Pfropfpolymer nach Anspruch 1, wobei m von 1 bis 3 ist, R¹ eine Nonylgruppe oder eine 1-Phenylethylengruppe umfasst, X -O-umfasst und n von 2 bis 25 ist.

13. Pfropfpolymer nach Anspruch 12, wobei m 1 ist, R¹ eine Nonylgruppe umfasst, der hydrophile Schwanz eine - [OCH(CH₃)CH₂]ₙ-Gruppe umfasst und n von 2 bis 5 ist.

14. Pfropfpolymer nach Anspruch 12, wobei m 3 ist, R¹ eine 1-Phenylethylengruppe umfasst, der hydrophile Schwanz eine - (OCH₂CH₂)ₙ-Gruppe umfasst und n 25 ist.

15. Pfropfpolymer nach Anspruch 1, umfassend zufällig verteilte Monomereinheiten, wobei
das hydrophile Polymersegment Monomereinheiten der folgenden Formel umfasst: 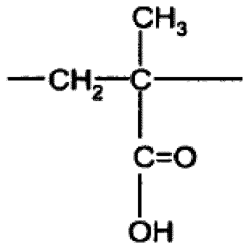 worin das Monomer in 18 bis 84 Mol-% vorhanden ist;
wobei
das hydrophobe Polymersegment Monomereinheiten der folgenden Formel umfasst: 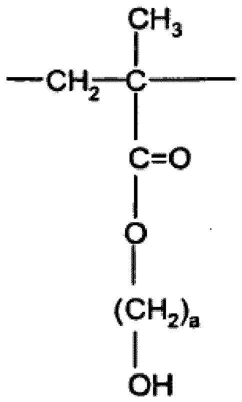 worin a eine ganze Zahl von 1 bis 9 ist und das Monomer in 13 bis 50 Mol-% vorhanden ist;
wobei
das stabilisierende Polymersegment Monomereinheiten der folgenden Formel umfasst: 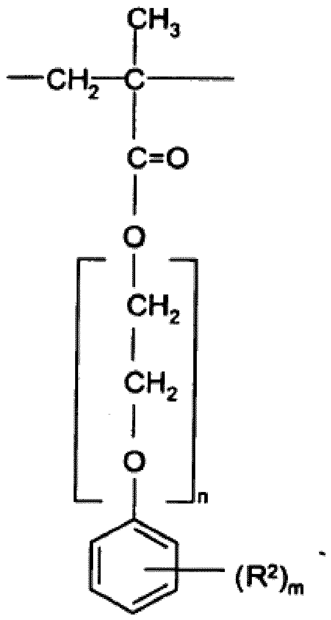 worin n eine ganze Zahl von 1 bis 25 ist; m eine ganze Zahl von 1 bis 3 ist; und jedes R² unabhängig eine C₁-C₉-Alkyl- oder C₁-C₉-Alkylenarylgruppe umfasst, sofern mindestens ein R² eine C₁-C₉-Alkylenarylgruppe umfasst; und das Monomer in 1,5 bis 50 Mol-% vorhanden ist; und 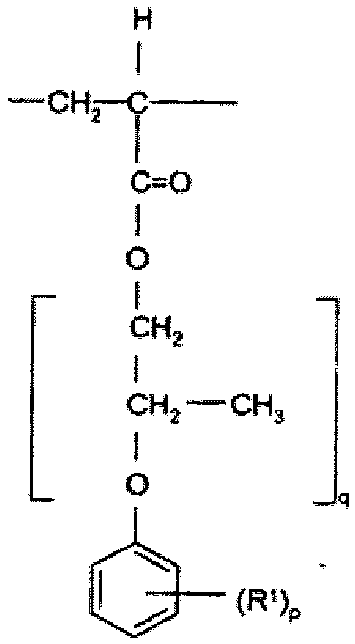 worin q eine ganze Zahl von 2 bis 5 ist; p eine ganze Zahl von 1 bis 3 ist; und jedes R¹ unabhängig eine C₁-C₉-Alkyl- oder C₁-C₉-Alkylenarylgruppe umfasst, sofern mindestens ein R¹ eine C₁-C₉-Alkylgruppe umfasst; und das Monomer in 1,5 bis 50 Mol-% vorhanden ist.

16. Pfropfpolymer nach Anspruch 15, wobei a 2 ist, n 25 ist, m 3 ist, q von etwa 2 bis 5 ist, p 1 ist, R Nonyl umfasst und R 1-Penylethy umfasst.

17. Pfropfpolymer nach Anspruch 1, wobei das Pfropfpolymer ein durchschnittliches Molekulargewicht (Gewichtsmittel) von etwa 3.000 bis etwa 13.000 aufweist.

18. Pfropfpolymer nach Anspruch 17, wobei das Pfropfpolymer ein durchschnittliches Molekulargewicht (Gewichtsmittel) von etwa 5.000 bis etwa 9.000 aufweist.

19. Wässrige Farbstoffzusammensetzung für Tintenstrahldrucker, umfassend von etwa 0,1 % bis etwa 10 % ein Pigment und von etwa 0,1 % bis etwa 10 % ein Pfropfpolymer nach einem der Ansprüche 1 bis 18.

## Revendications

1. Polymère greffé comprenant :
(a) un segment polymérique hydrophile ;
(b) un segment polymérique hydrophobe comprenant un motif monomérique hydrophobe comprenant un méthacrylate d'hydroxyalkyle ou un acrylate d'hydroxyalkyle ; et
(c) un segment polymérique stabilisateur comprenant un groupe fonctionnel aromatique, dans lequel le segment polymérique stabilisateur comprend un motif monomérique stabilisateur comprenant de l'acrylate de nonylphénol ; du méthacrylate de nonylphénol ; du méthacrylate de nonylphénoxy poly(propylèneoxy)ₙ, où n vaut de 1 à environ 40 ; de l'acrylate de nonylphénoxy poly(propylèneoxy)ₙ, où n vaut de 1 à environ 40 ; ou du méthacrylate de 2,4,6-tris-(1-phényléthyl)phénoxy poly(éthylèneoxy)ₙ, où n vaut d'environ 1 à environ 40 ; ou dans lequel le segment polymérique stabilisateur comprend un motif monomérique stabilisateur comprenant
(a) une tête hydrophobe de formule : 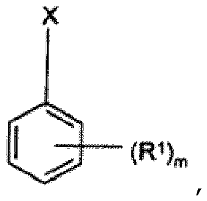 où m est un nombre entier de 1 à 3, X comprend un groupe lieur comprenant -O-, -NH- ou -S-, et chaque R¹ comprend indépendamment un groupe hydroxy, -alkyle en C₁ à C₉, -alkylène en C₁ à C₉-aryle, ou hétéroaryle ; et
(b) une queue hydrophile comprenant un groupe -(OCH₂CH₂)ₙ- ou -[OCH(CH₃)CH₂]ₙ-, où n vaut de 0 à 50, où la queue hydrophile est liée à la tête hydrophobe par l'intermédiaire du groupe lieur X et l'autre extrémité de la queue hydrophile est liée à un fragment de groupe ester de vinyle.

2. Polymère greffé selon la revendication 1, dans lequel le segment polymérique hydrophile comprend de l'acide méthacrylique ou de l'acide acrylique.

3. Polymère greffé selon la revendication 1, dans lequel le segment polymérique hydrophile comprend d'environ 18 à 84 % en mole du polymère greffé.

4. Polymère greffé selon la revendication 3, dans lequel le segment polymérique hydrophile comprend environ 50 % en mole du polymère greffé.

5. Polymère greffé selon la revendication 1, dans lequel le segment polymérique hydrophobe comprend du méthacrylate de 2-hydroxyéthyle.

6. Polymère greffé selon la revendication 1, dans lequel le segment polymérique hydrophobe comprend d'environ 13 à 50 % en mole du polymère greffé.

7. Polymère greffé selon la revendication 1, dans lequel le segment polymérique hydrophobe comprend environ 30 % en mole du polymère greffé.

8. Polymère greffé selon la revendication 1, dans lequel le segment polymérique stabilisateur comprend de l'acrylate de nonylphénoxy poly(propylèneoxy)ₙ, où n vaut d'environ 2 à environ 15.

9. Polymère greffé selon la revendication 1, dans lequel le segment polymérique stabilisateur comprend du méthacrylate de 2,4,6-tris-(1-phényléthyl) phénoxy poly(éthylèneoxy)ₙ, où n vaut d'environ 2 à 25.

10. Polymère greffé selon la revendication 1, dans lequel le segment polymérique stabilisateur comprend d'environ 1,5 à 60 % en mole du polymère greffé.

11. Polymère greffé selon la revendication 1, dans lequel le segment polymérique stabilisateur comprend environ 20 % du polymère greffé.

12. Polymère greffé selon la revendication 1, dans lequel m vaut de 1 à 3, R¹ comprend un groupe nonyle ou un groupe 1-phényléthylène, X comprend -O-, et n vaut de 2 à 25.

13. Polymère greffé selon la revendication 12, dans lequel m vaut 1, R¹ comprend un groupe nonyle, la queue hydrophile comprend un groupe -[OCH(CH₃)CH₂]ₙ-, et n vaut de 2 à 5.

14. Polymère greffé selon la revendication 12, dans lequel m vaut 3, R¹ comprend un groupe 1-phényléthylène, la queue hydrophile comprend un groupe -(OCH₂CH₂]ₙ-, et n vaut 25.

15. Polymère greffé selon la revendication 1, comprenant des motifs monomères distribués au hasard, dans lequel le segment polymérique hydrophile comprend des motifs monomères de formule : 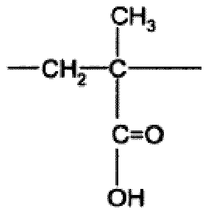 où le monomère est présent à hauteur de 18 à 84 % en mole ;
dans lequel
le segment polymérique hydrophobe comprend des motifs monomères de formule : 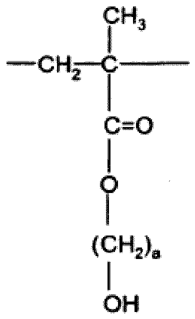 où a est un nombre entier de 1 à 9, et le monomère est présent à hauteur de 13 à 50 % en mole ;
dans lequel
le segment polymérique stabilisateur comprend des motifs monomères des formules : 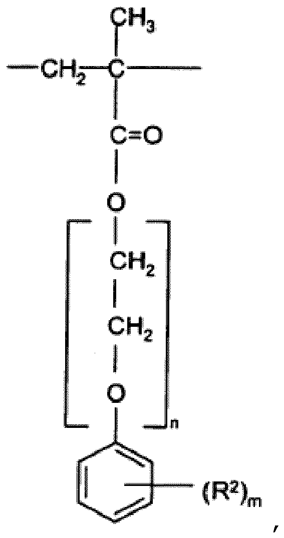 où n est un nombre entier de 1 à 25 ; m est un nombre entier de 1 à 3 ; et chaque R² comprend indépendamment un groupe alkyle en C₁ à C₉, ou -alkylène en C₁ à C₉-aryle, à condition qu'au moins l'un desdits R² comprenne un groupe -alkylène en C₁ à C₉-aryle ; et le monomère est présent à hauteur de 1,5 à 50 % en mole ; et 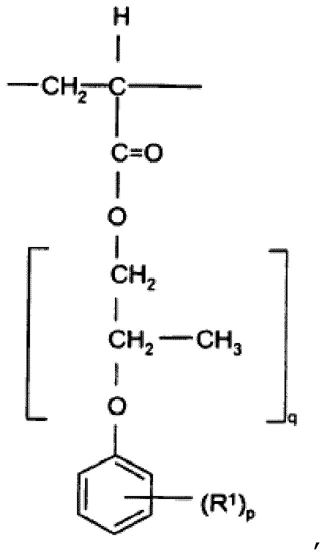 où q est un nombre entier de 2 à 5 ; p est un nombre entier de 1 à 3 ; et chaque R¹ comprend indépendamment un groupe alkyle en C₁ à C₉, ou -alkylène en C₁ à C₉-aryle, à condition qu'au moins l'un desdits R¹ comprenne un groupe -alkyle en C₁ à C₉ ; et le monomère est présent à hauteur de 1,5 à 50 % en mole.

16. Polymère greffé selon la revendication 15, dans lequel a vaut 2, n vaut 25, m vaut 3, q vaut d'environ 2 à 5, p vaut 1, R¹ comprend un nonyle, et R² comprend un 1-phényléthyle.

17. Polymère greffé selon la revendication 1, dans lequel le polymère greffé a une masse moléculaire moyenne en masse d'environ 3 000 à environ 13 000.

18. Polymère greffé selon la revendication 17, dans lequel le polymère greffé a une masse moléculaire moyenne en masse d'environ 5 000 à environ 9 000.

19. Composition d'encre aqueuse pour imprimantes à jet d'encre comprenant d'environ 0,1 % à environ 10 % d'un pigment, et d'environ 0,1 % à environ 10 % d'un polymère greffé tel que défini dans l'une quelconque des revendications 1 à 18.
